# EUROPEAN PATENT APPLICATION

(11) **EP 1 249 984 A2**
(43) Date of publication of application: **16.10.2002**
(21) Application number: 02007703.8
(22) Date of filing: 05.04.2002
(51) Int. Cl.: H04L 29/06

(54) **Gateway system**

(30) Priority: 10.04.2001 JP 2001111172
(71) Applicant: MITSUBISHI DENKI KABUSHIKI KAISHA, Tokyo 100-8310 (JP)
(72) Inventor: Fushimi, Wataru, Mitsubishi Denki Kabushiki Kaisha, Tokyo 100-8310 (JP); Suzuki, Shigeaki, Mitsubishi Denki Kabushiki K., Tokyo 100-8310 (JP); Ogawa, Isamu, Mitsubishi Denki Kabushiki Kaisha, Tokyo 100-8310 (JP)
(74) Representative: Pfenning, Meinig & Partner GbR

(57) **Abstract**

A high-efficiency and high-flexibility gateway system is disclosed which is capable of making a connection with even a gateway apparatus that supports only the standard IP packet format and capable of performing a high-efficiency transmission even when only one channel is used in a particular direction. A transmitting-end apparatus includes a standard packet assembler for assembling an input signal into a standard packet; a short packet assembler for assembling an input signal into a short packet; a layered-packet assembler for assembling short packets assembled by the short packet assembler into a standard packet; a packet selection controller for selecting either the standard packet assembler or the short packet assembler in accordance with a predetermined condition; a selector for selectively outputting an input signal to either the standard packet assembler or the short packet assembler under the control of the packet selection controller; and a packet transmitter for outputting, over a line, packets supplied from the standard packet assembler and the layered-packet assembler.

## Description

This application is based on Application No. 2001-111172, filed in Japan on April 10, 2001, the contents of which are hereby incorporated by reference.

### BACKGROUND OF THE INVENTION

### 1. Field of the Invention

The present invention relates to a gateway system for transmitting a signal such as a voice signal using an IP packet and also to a voice gateway system.

### 2. Description of the Related Art

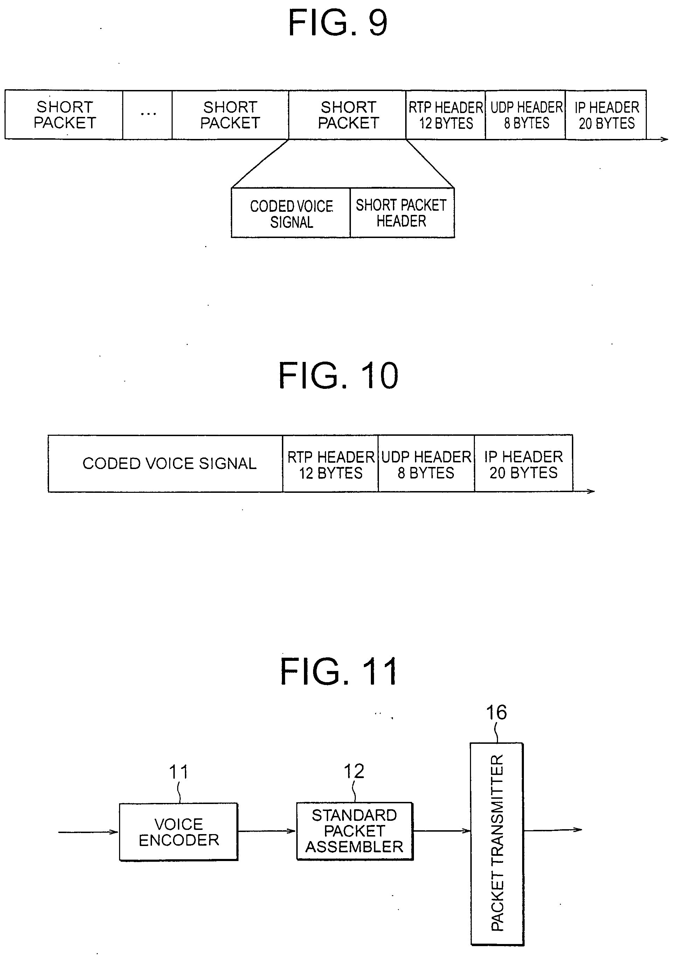

Fig. 11 shows a conventional transmitting-end apparatus widely used in a voice gateway system. As shown in Fig. 11, this transmitting-end apparatus used in the voice gateway system includes a voice encoder 11 for coding a voice signal, a standard packet assembler 12 for constructing a standard packet, and a packet sender 16 for sending a packet over a line such as a network line.

This transmitting-end apparatus operates as follows. The voice encoder 11 codes an input voice signal. The resultant coded voice signal is supplied from the voice encoder 11 to the standard packet assembler 12. The standard packet assembler 12 assembles the coded voice signal into a standard packet in a format such as that shown in Fig. 10. The resultant assembled packet is outputted over a line via the packet sender 16.

The voice coding is performed by the voice encoder 11 in accordance with, for example, the 8-kbit/s CS-ACELP scheme described in the ITU-T recommendation G.729. In this case, 10-byte data is generated every 10 msec, and each 10-byte data is assembled into a standard packet in the format shown in Fig. 10. The resultant standard packet includes a coded voice signal with a length of 10 bytes and headers with a total length of 40 bytes, and thus a problem of a large header overhead occurs.

A technique to solve the above problem is disclosed, for example, in Japanese Unexamined Patent Application Publication No. 11-122307. In this voice gateway system disclosed in Japanese Unexamined Patent Application Publication No. 11-122307, as shown in Fig. 12, a transmitting-end apparatus includes a plurality of channels (units) each including a encoder 112, a buffer 113, a short packet constructor 114, a short packet header generator 115, a payload length designator 116, and a short packet buffer 117. For common use by these elements, the transmitting-end apparatus further includes a call controller 111, a packet assembler 118, a packet sending scheduler 119, and a packet send/receive unit 110. On the other hand, a receiving-end apparatus includes a plurality of channels each including a decoder 122, a buffer 123, a short packet disassembler 124, and a short packet buffer 127. For common use by these elements, the receiving-end apparatus further includes a call controller 121, a packet disassembler 128, and a packet send/receive unit 120.

The operations of the transmitting-end apparatus and the receiving-end apparatus are described. In the transmitting-end apparatus, the encoder 112 codes an information signal, and the resultant coded information signal is temporarily stored in the buffer 113. The short packet constructor 114 acquires, from the short packet header generator 115, a short packet header to be used for the information signal of the call, and also acquires, from the payload length designator 116, the payload length for the short packet of the information signal. The short packet constructor 114 then extracts a segment of the coded information signal with a length equal to the payload length from the buffer 113. For each call, a short packet is constructed from the short packet header and the short packet payload. The short packet constructor 114 transfers the resultant short packet to the short packet buffer 117.

In accordance with a command issued by the packet sending scheduler 119 in response to a signal from the call controller 111, the packet assembler 118 extracts short packets from the short packet buffer 117 and constructs an IP packet having a layered structure (layered packet) such as that shown in Fig. 9. Immediately after completion of construction of the IP packet, the packet assembler 118 transfers the resultant IP packet to the packet send/receive unit 110. Upon receiving this packet, the packet send/receive unit 110 sends the received packet over the Internet.

In the receiving-end apparatus, the IP packet is received by the packet send/receive unit 120 and transferred to the packet disassembler 128. The packet disassembler 128 disassembles the received IP packet into short packets, reads a communication line number described in each short packet header, and transfers each short packet to a corresponding short packet buffer 127. The short packet disassembler 124 receives the short packet from the short packet buffer 127, disassembles the received short packet into coded information signals, and transfers them to the buffer 123. The decoder 122 receives the coded information signals from the buffer 123 and sequentially decodes them. The resultant audio signal is transmitted to a called terminal.

However, in the conventional voice gateway system constructed in the above-described manner, if only standard IP packets are used, packets have a large overhead that results in inefficiency in use of lines. On the other hand, when only layered packets are used, an effective reduction in the packet overhead cannot be obtained, if sending is performed via only one channel. On the contrary, use of only layered packets results in a greater overhead. Besides, layered packets cannot be employed, unless an apparatus at an opposite end supports the layered packet format.

### SUMMARY OF THE INVENTION

In view of the above, an object of the present invention is to provide a gateway system capable of making a connection with even a gateway apparatus that supports only the standard packet format and capable of performing a high-efficiency transmission even when only one channel is used in a particular direction.

According to an aspect of the present invention, in view of the above, there is provided a gateway system including a transmitting-end apparatus comprising a standard packet assembler for assembling an input signal into a standard packet; a short packet assembler for assembling an input signal into a short packet; a layered-packet assembler for assembling short packets assembled by the short packet assembler into a standard packet; a packet selection controller for selecting either the standard packet assembler or the short packet assembler in accordance with a predetermined condition; a selector for selectively outputting an input signal to either the standard packet assembler or the short packet assembler under the control of the packet selection controller; and a packet sender for outputting, over a line, packets supplied from the standard packet assembler and the layered-packet assembler.

In this gateway system, the transmitted signal may be a voice signal.

In this gateway system, the transmitting-end apparatus may further comprise a voice encoder for performing voice coding on an input voice signal.

In this gateway system, the packet selector may include a number-of-channels monitor for monitoring the number of channels used in transmission to the same apparatus at an opposite end.

The packet selection controller may include a number-of-channels monitor for monitoring the number of channels used in transmission to the same apparatus at an opposite end and an opposite apparatus information managing unit for managing information indicating whether the layered packet format is supported by the apparatus at the opposite end.

The opposite apparatus information managing unit may be realized by using apparatus setting information that is set in the apparatus in advance.

Alternatively, the opposite apparatus information managing unit may be realized by using information described in a packet received from the apparatus at the opposite end.

The packet selection controller may include a congestion-in-apparatus monitor for monitoring a congestion status in the apparatus.

The packet selection controller may include a network line quality monitor for monitoring network line quality.

According to another aspect of the present invention, there is provided a gateway system including a receiving-end apparatus comprising a standard packet disassembler for disassembling an input standard packet; a layered-packet disassembler for disassembling an input layered packet into short packets; a short packet disassembler for disassembling a short packet outputted from the layered-packet disassembler; a received-packet selection controller for selecting either the standard packet disassembler or the layered-packet disassembler in accordance with a predetermined condition; a selector for selectively outputting an input signal to either the standard packet disassembler or the layered-packet disassembler under the control of the received-packet selection controller; and a packet receiver for receiving a packet from a line and transmitting the received packet to the selector.

In this gateway system, the received signal may be a voice signal.

In this gateway system, the receiving-end apparatus may further comprise a voice decoder for decoding the received coded voice signal.

The received-packet selection controller may include a packet size monitor for controlling the selection on the basis of the size of a received packet.

The received-packet selection controller may include a packet size monitor and a packet sender monitor, for controlling the selection on the basis of the size and a sender address of a received packet.

The received-packet selection controller may include a packet port number monitor for controlling the selection in accordance with the port number of a received packet.

The received-packet selection controller may include a packet disassemble status monitor for controlling the selection in accordance with the result of disassembling a receiving packet by assuming that the received packet is a layered packet.

According to still another aspect of the present invention, there is provided a gateway system including a receiving-end apparatus comprising a packet receiver for receiving a packet from a line; a buffer for temporarily storing a packet outputted from the packet receiver; a layered-packet disassembler for disassembling a layered packet outputted from the packet receiver into short packets; a packet disassemble status monitor for monitoring whether disassembling is correctly performed by the layered-packet disassembler; a standard packet disassembler for disassembling an input standard packet; a short packet disassembler for disassembling an input short packet; a received-packet selection controller for selecting the short packet disassembler if the packet disassemble status monitor determines that the disassembling has been correctly performed by the layered-packet disassembler but otherwise selecting the standard packet disassembler; and a selector for making a connection under the control of the received-packet selection controller such that a short packet outputted from the layered-packet disassembler to the short packet disassembler or a packet outputted from the buffer to the standard packet disassembler.

### BRIEF DESCRIPTION OF THE DRAWINGS

Fig. 1 is a diagram illustrating the construction of a transmitting-end apparatus in a gateway system according to a first embodiment of the present invention;
Fig. 2 is a diagram illustrating the construction of a transmitting-end apparatus in a gateway system according to a second embodiment of the present invention;
Fig. 3 is a diagram illustrating the construction of a transmitting-end apparatus in a gateway system according to a third embodiment of the present invention;
Fig. 4 is a diagram illustrating the construction of a transmitting-end apparatus in a gateway system according to a fourth embodiment of the present invention;
Fig. 5 is a diagram illustrating the construction of a receiving-end apparatus in a gateway system according to a fifth embodiment of the present invention;
Fig. 6 is a diagram illustrating the construction of a receiving-end apparatus in a gateway system according to a sixth embodiment of the present invention;
Fig. 7 is a diagram illustrating the construction of a receiving-end apparatus in a gateway system according to a seventh embodiment of the present invention;
Fig. 8 is a diagram illustrating the construction of a receiving-end apparatus in a gateway system according to an eighth embodiment of the present invention;
Fig. 9 is a diagram illustrating an example of a layered packet format;
Fig. 10 is a diagram illustrating an example of a standard packet format;
Fig. 11 is a diagram illustrating a conventional apparatus at a transmitting end in a gateway system; and

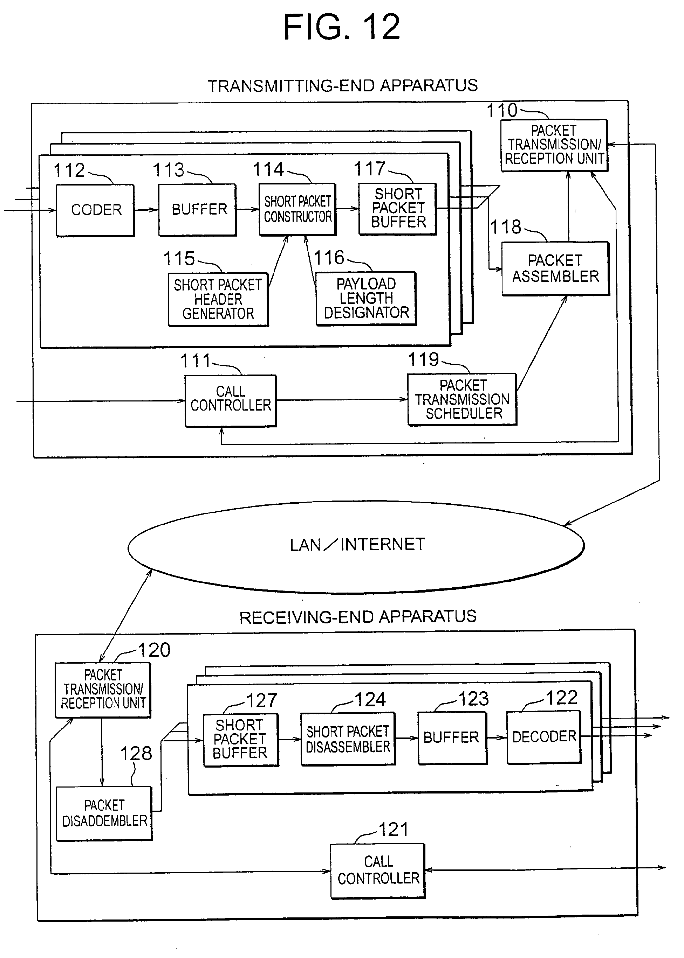

Fig. 12 is a diagram illustrating another conventional gateway system.

### DESCRIPTION OF THE PREFERRED EMBODIMENTS

The present invention is described in further detail below with reference to preferred embodiments.

### First Embodiment

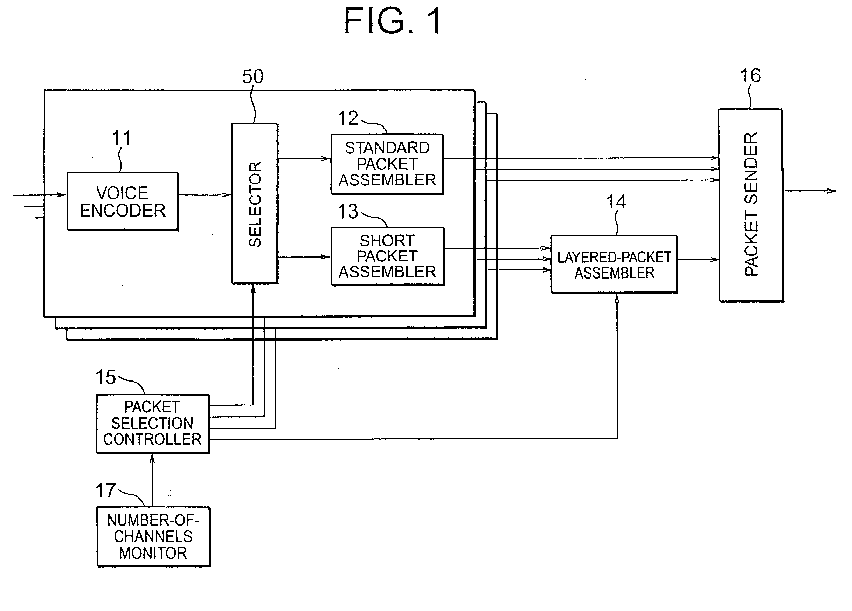

Fig. 1 shows the construction of a transmitting-end apparatus in a voice gateway system according to a first embodiment of the present invention. In Fig. 1, reference numeral 11 denotes a voice encoder for coding a voice signal, and reference numeral 12 denotes a standard packet assembler for constructing a standard IP packet from a coded voice signal inputted via a selector 50 from the voice encoder 11. Reference numeral 13 denotes a short packet assembler for constructing a short packet from a coded voice signal inputted, via the selector 50, from the voice encoder 11. One channel (unit) is formed of one voice encoder 11, one standard packet assembler 12, and one short packet assembler, and there are provided a plurality of channels.

Reference numeral 14 denotes a layered-packet assembler for assembling short packets constructed for respective channels into a standard IP packet. Reference numeral 16 denotes a packet sender for outputting, over a line such as a network, the IP packet received from the standard packet assembler 12 or the layered-packet assembler 14. Reference numeral 15 denotes a packet selection controller for controlling the selector 50 such that either a standard packet or a short packet is constructed. Reference numeral 17 denotes a number-of-connected-channels monitor for monitoring the number of connected channels in one direction. The selector 50 serves to selectively output the signal received from the voice encoder 11 to ether the standard packet assembler 12 or the short packet assembler 13 under the control of the packet selection controller 15.

The operation is described. The voice encoder 11 codes an input voice signal and outputs a resultant coded voice signal to the selector 50. The number-of-channels monitor 17 monitors which channels are connected in a particular direction and how many channels are connected (on the basis of signals from blocks 11, 12, and 13 of each channel). The number-of-channels monitor 17 supplies resultant information to the packet selection controller 15. When the information supplied from the number-of-channels monitor 17 indicates that two or more channels are connected in a particular direction, the packet selection controller 15 controls the selectors 50 in these channels such that the signals from the voice encoders 11 of the respective channels are supplied to the corresponding short packet assemblers 13, and the packet selection controller 15 further controls the layered-packet assembler 14 such that short packets in channels in each direction are assembled into a standard packet.

The short packet assembler 13 constructs a short packet with a size smaller than the standard packet size, by adding a short packet header to a coded voice signal in a channel, as shown in Fig. 9. In the case where only one channel is used in a particular direction, the selector 50 is controlled such that the signal from the voice encoder 11 is supplied to the standard packet assembler 12. The layered-packet assembler 14 assembles a plurality of short packets into a single IP packet in the form of a layered packet as shown in Fig. 9. On the other hand, the standard packet assembler 12 constructs a single standard packet from a coded voice signal in one channel, as shown in Fig. 10. The IP packet outputted from the standard packet assembler 12 or the layered-packet assembler 14 is outputted over the line via the packet sender 16.

As described above, the number of channels connected in a particular direction is monitored. when a plurality of channels are connected in a particular direction, a layered packet is constructed, while a standard packet is constructed when a single channel is used in the particular direction. This makes it possible to achieve a high-efficiency transmission regardless of the situation.

The technique disclosed herein according to the present invention may also be applied to a voice gateway system in which no voice encoder is used and also to a gateway system for transmitting a general data signal. This is also true for the other embodiments that will be described later.

The port number described in the packet header may be different between standard packets and layered packets.

### Second Embodiment

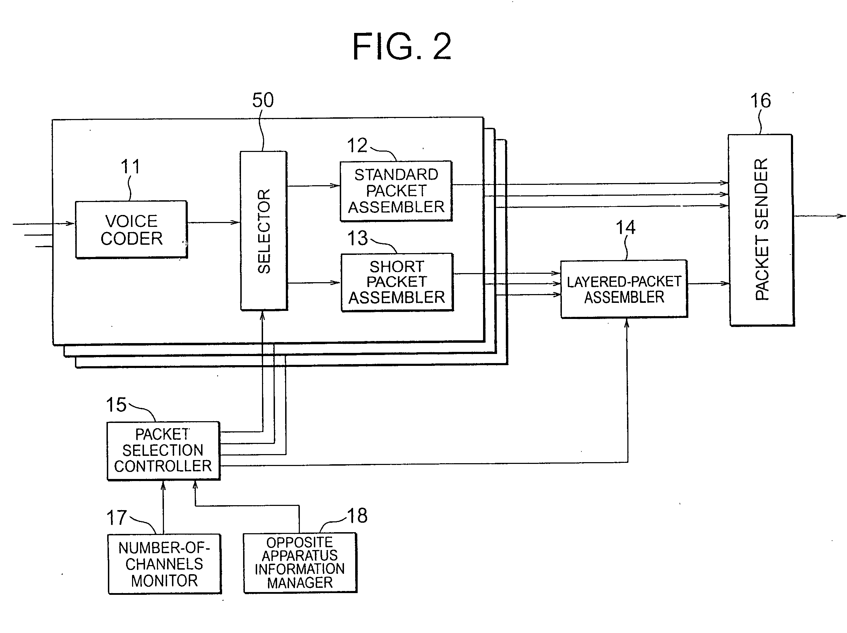

Fig. 2 shows the construction of a transmitting-end apparatus in a voice gateway system according to a second embodiment of the present invention. In Fig. 2, similar parts to those in the first embodiment described above are denoted by similar reference numerals and they are not described in further detail herein. In Fig. 2, reference numeral 18 denotes an opposite apparatus information manager for managing information indicating whether an apparatus at an opposite end with which communication is performed supports the layered packet format.

The operation is described below. The voice encoder 11 codes an input voice signal and outputs a resultant coded voice signal to the selector 50. The number-of-channels monitor 17 monitors which channels are connected in a particular direction and how many channels are connected, and supplies resultant information to the packet selection controller 15. The opposite apparatus information manager 18 transmits information indicating whether the apparatus at the opposite end supports the layered packet format to the packet selection controller 15. If the information supplied from the number-of-channels monitor 17 indicates that two or more channels are connected in a particular direction and if the information supplied from the opposite apparatus information manager 18 indicates that the layered packet format is supported by the apparatus at the opposite end in this particular direction, the packet selection controller 15 controls the selectors 50 in these channels such that the signals from the voice encoders 11 of the respective channels are supplied to the corresponding short packet assemblers 13, and the packet selection controller 15 further controls the layered-packet assembler 14 such that short packets in channels in this direction are assembled into a standard packet.

The short packet assembler 13 constructs a short packet with a size smaller than the standard packet size, by adding a short packet header to a coded voice signal in a channel, as shown in Fig. 9. In the other cases, that is, when only one channel is used in a particular direction, or when an apparatus at an opposite end does not support the layered packet format, the selector 50 is controlled such that the signal from the voice encoder 11 is supplied to the standard packet assembler 12. The layered-packet assembler 14 assembles a plurality of short packets into a single IP packet in the form of a layered packet as shown in Fig. 9. On the other hand, the standard packet assembler 12 constructs a single standard packet from a coded voice signal in one channel, as shown in Fig. 10. The IP packet outputted from the standard packet assembler 12 or the layered-packet assembler 14 is outputted over the line via the packet sender 16.

In the voice gateway system according to the present embodiment, as described above, the number of channels connected to a particular direction is monitored and it is checked whether an apparatus at an opposite end supports the layered packet format, thereby making it possible to make a connection with even a gateway apparatus that supports only the standard packet and also making it possible to achieve a high-efficiency transmission even when only one channel is used in a particular direction. Thus, a high-efficiency and high-flexibility voice gateway system can be realized according to the present embodiment of the invention.

The opposite apparatus information managing unit may be realized using apparatus setting information that is set in an apparatus in advance.

The opposite apparatus information managing unit may also be realized using information obtained via a packet transmission between apparatuses.

### Third Embodiment

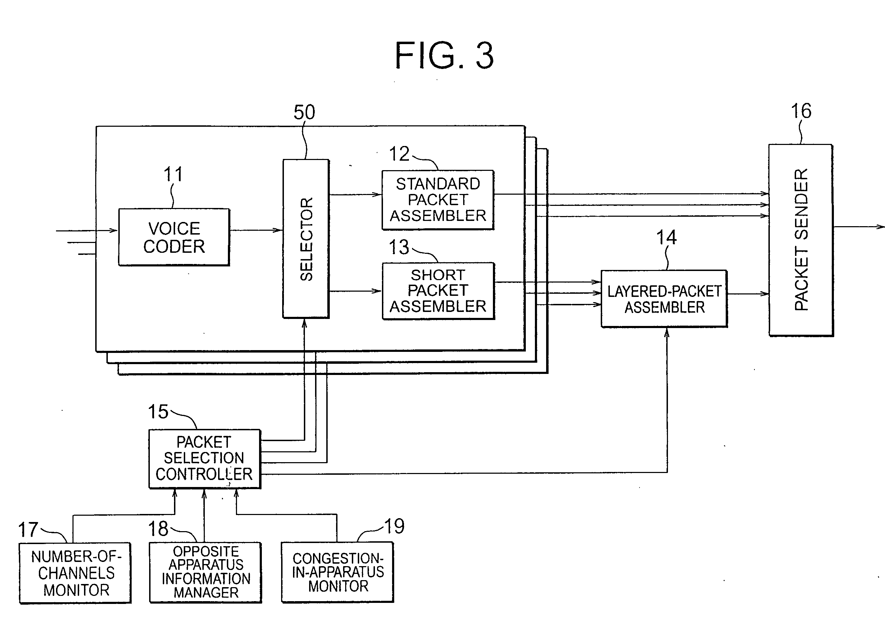

Fig. 3 shows the construction of a transmitting-end apparatus in a voice gateway system according to a third embodiment of the present invention. In Fig. 3, similar parts to those in the previous embodiments described above are denoted by similar reference numerals and they are not described in further detail herein. In Fig. 3, reference numeral 19 denotes a congestion-in-apparatus monitor for monitoring the status of the apparatus in terms of congestion.

The operation is described. The voice encoder 11 codes an input voice signal and outputs a resultant coded voice signal to the selector 50. The number-of-channels monitor 17 monitors which channels are connected in a particular direction and how many channels are connected, and supplies resultant information to the packet selection controller 15. The opposite apparatus information manager 18 transmits information indicating whether the apparatus at the opposite end supports the layered packet format to the packet selection controller 15. The congestion-in-apparatus monitor 19 monitors the status of the apparatus in terms of congestion on the basis of signals in the apparatus and supplies information indicating whether a congestion occurs in the apparatus to the packet selection controller 15. The packet selection controller 15 controls each selector 50 in accordance with the information supplied from the number-of-channels monitor 17, the information supplied from the opposite apparatus information manager 18, and the information supplied from the congestion-in-apparatus monitor 19. That is, if N or more channels are connected in a particular direction and if an apparatus at an opposite end in this direction supports the layered packet format, the selectors 50 in these channels are controlled such that the signals from the voice encoders 11 of the respective channels are supplied to the corresponding short packet assemblers 13, and the packet selection controller 15 further controls the layered-packet assembler 14 such that short packets in channels in this direction are assembled into a standard packet.

The short packet assembler 13 constructs a short packet with a size smaller than the standard packet size, by adding a short packet header to a coded voice signal in a channel, as shown in Fig. 9. In the other cases, that is, when the number of channels connected in a particular direction is smaller than N, or when an apparatus at an opposite end does not support the layered packet format, each selector 50 is controlled such that the signal from the voice encoder 11 is supplied to the standard packet assembler 12. The value of N is determined in accordance with the information supplied from the congestion-in-apparatus monitor 19 so as to handle the congestion. The layered-packet assembler 14 assembles a plurality of short packets into a single IP packet in the form of a layered packet as shown in Fig. 9. On the other hand, the standard packet assembler 12 constructs a single standard packet from a coded voice signal in one channel, as shown in Fig. 10. The IP packet outputted from the standard packet assembler 12 or the layered-packet assembler 14 is outputted over the line via the packet sender 16.

In the voice gateway system according to the present embodiment, as described above, the number of channels connected to a particular direction is monitored, the status of the apparatus in terms of congestion is monitored, and it is checked whether an apparatus at an opposite end supports the layered packet format, thereby making it possible to make a connection with even a gateway apparatus that supports only the standard packet and also making it possible to achieve high efficiency in transmission depending upon the status of the apparatus in terms of congestion. Thus, a high-efficiency and high-flexibility voice gateway system can be realized according to the present embodiment of the invention.

### Fourth Embodiment

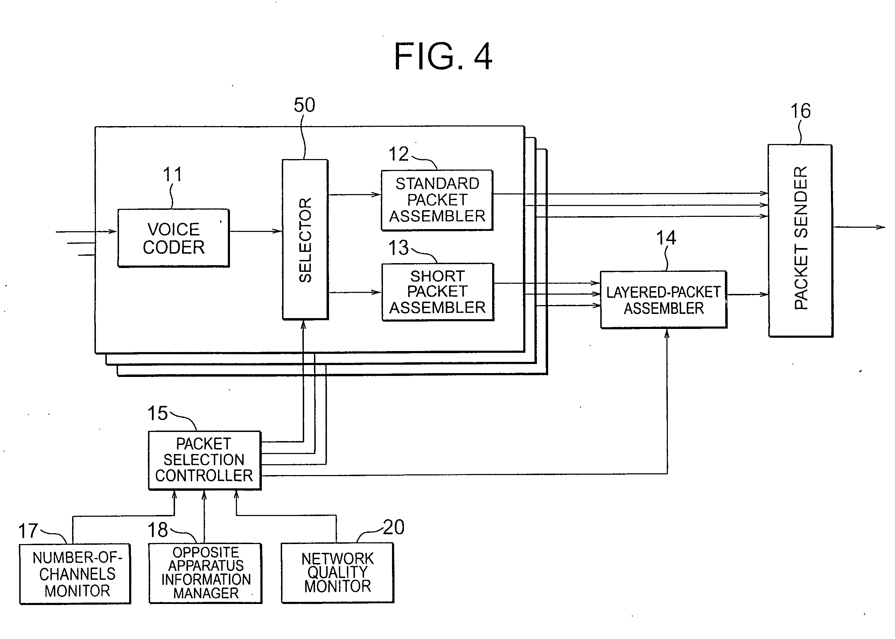

Fig. 4 shows the construction of a transmitting-end apparatus in a voice gateway system according to a fourth embodiment of the present invention. In Fig. 4, similar parts to those in the previous embodiments described above are denoted by similar reference numerals and they are not described in further detail herein. In Fig. 4, reference numeral 20 denote a network status monitor for monitoring the status of a network line in terms of the network quality. That is, the network status monitor monitors whether a packet loss or a bit error occurs in the network line.

The operation is described. The voice encoder 11 codes an input voice signal and outputs a resultant coded voice signal to the selector 50. The number-of-channels monitor 17 monitors which channels are connected in a particular direction and how many channels are connected, and supplies resultant information to the packet selection controller 15. The opposite apparatus information manager 18 transmits information indicating whether the apparatus at the opposite end supports the layered packet format to the packet selection controller 15. The network status monitor 20 monitors the status of the network in terms of the network quality on the basis of signals in the apparatus and supplies information to the packet selection controller 15 to notify it whether the network is in a high-quality state in which neither packet loss nor bit error occurs. The packet selection controller 15 controls each selector 50 in accordance with the information supplied from the number-of-channels monitor 17, the information supplied from the opposite apparatus information manager 18, and the information supplied from the network status monitor 20. That is, if N or more channels are connected in a particular direction and if an apparatus at an opposite end in this direction supports the layered packet format, the selectors 50 in these channels are controlled such that the signals from the voice encoders 11 of the respective channels are supplied to the corresponding short packet assemblers 13, and the packet selection controller 15 further controls the layered-packet assembler 14 such that short packets in channels in this direction are assembled into a standard packet.

The short packet assembler 13 constructs·a short packet with a size smaller than the standard packet size, by adding a short packet header to a coded voice signal in a channel, as shown in Fig. 9. In the other cases, that is, when the number of channels connected in a particular direction is smaller than N, or when an apparatus at an opposite end does not support the layered packet format, each selector 50 is controlled such that the signal from the voice encoder 11 is supplied to the standard packet assembler 12. The value of N is determined in accordance with the information supplied from the network status monitor 20 so as to handle the network quality. The layered-packet assembler 14 assembles a plurality of short packets into a single IP packet in the form of a layered packet as shown in Fig. 9. On the other hand, the standard packet assembler 12 constructs a single standard packet from a coded voice signal in one channel, as shown in Fig. 10. The IP packet outputted from the standard packet assembler 12 or the layered-packet assembler 14 is outputted over the line via the packet sender 16.

In the voice gateway system according to the present embodiment, as described above, the number of channels connected to a particular direction is monitored, the network quality is monitored, and it is checked whether an apparatus at an opposite end supports the layered packet format, thereby making it possible to make a connection with even a gateway apparatus that supports only the standard packet and also making it possible to achieve high efficiency in transmission depending upon the network quality. Thus, a high-efficiency and high-flexibility voice gateway system can be realized according to the present embodiment of the invention.

### Fifth Embodiment

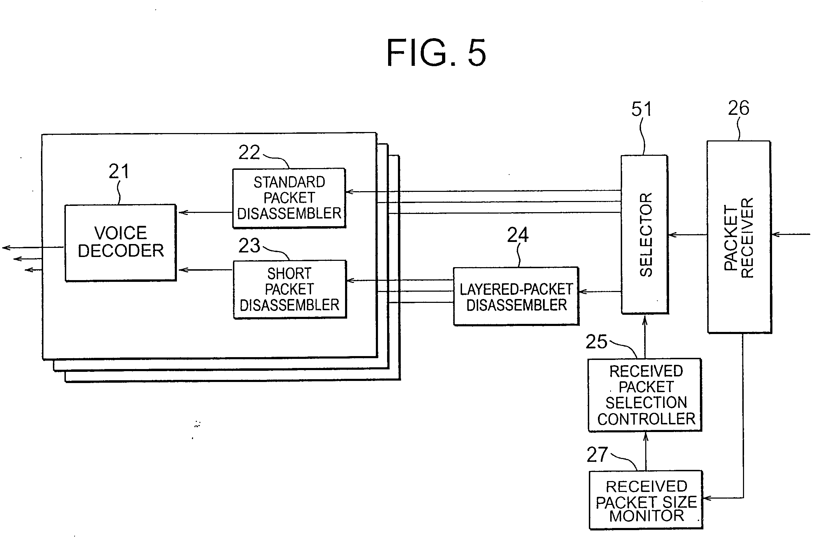

Fig. 5 shows the construction of a receiving-end apparatus in a voice gateway system according to a fifth embodiment of the present invention. In Fig. 5, reference numeral 21 denotes a voice decoder for decoding a coded voice signal, reference numeral 22 denotes a standard packet disassembler for disassembling a standard packet inputted via a selector 51, reference numeral 23 denotes a short packet disassembler for disassembling a short packet supplied from a layered-packet disassembler 24 that serves to disassemble an input layered packet into short packets, reference numeral 26 denotes a packet receiving unit for receiving an IP packet via a line such as a network line, reference numeral 25 denotes a received packet selection controller for controlling a selector 51 so as to disassemble a standard or a layered packet, and reference numeral 27 denotes a packet size monitor for monitoring the size of received packet, wherein the selector 51 serves to output a packet inputted from the packet receiver 26 to the standard packet disassembler 22 or to the layered-packet disassembler 24 under the control of the received packet selection controller 25.

The operation is described. When a packet is received via the packet receiving unit 26, the packet is supplied to the selector 51. The packet is also supplied to the packet size monitor 27 to monitor the packet size. The packet size monitor 27 supplies information indicating the size (data size) of the input packet to the received packet selection controller 25. In accordance with the information supplied from the packet size monitor 27, the received packet selection controller 25 controls the selector 51 such that when the size of a received packet is smaller than a predetermined threshold value, the received packet is supplied to the standard packet disassembler 22, while the received packet is supplied to the layered-packet disassembler 24 when the packet size is equal to or greater than the threshold value.

The layered-packet disassembler 24 disassembles the inputted packet to short packets and outputs the resultant short packets to the short packet disassemblers 23 of the respective channels. Each short packet disassembler 23 disassembles the received short packet to extract a coded voice signal and outputs the extracted coded signal to the voice decoder 21. The standard packet disassembler 22 disassembles the standard packet to extract a coded voice signal and outputs the extracted coded signal to the voice decoder 21. The standard packet disassembler 22 and the short packet disassembler 23 perform disassembling only when a packet to be disassembled to inputted thereto and output an obtained coded voice signal to the voice decoder 21. However, when no packet is inputted, no signal is outputted. The voice decoder 21 decodes the coded voice signal supplied from the standard packet disassembler 22 or the short packet disassembler 23 and outputs a resultant decoded signal. However, when no signal is supplied from either the standard packet disassembler 22 or the short packet disassembler 23, a silent voice signal is outputted from the voice decoder 21.

In the voice gateway system according to the present embodiment of the invention, as described above, the size of received packets is monitored, and either the standard packet disassembler or the layered-packet disassembler is used depending upon the detected packet size, thereby making it possible to make a connection with not only a voice gateway apparatus that supports the layered packet format but also even a gateway apparatus that supports only the standard packet and thus making it possible to achieve high efficiency in transmission.

The technique disclosed herein according to the present invention may also be applied to a voice gateway system in which no voice decoder is used and also to a gateway system for transmitting a general data signal. This is also true for the other embodiments that will be described later.

### Sixth Embodiment

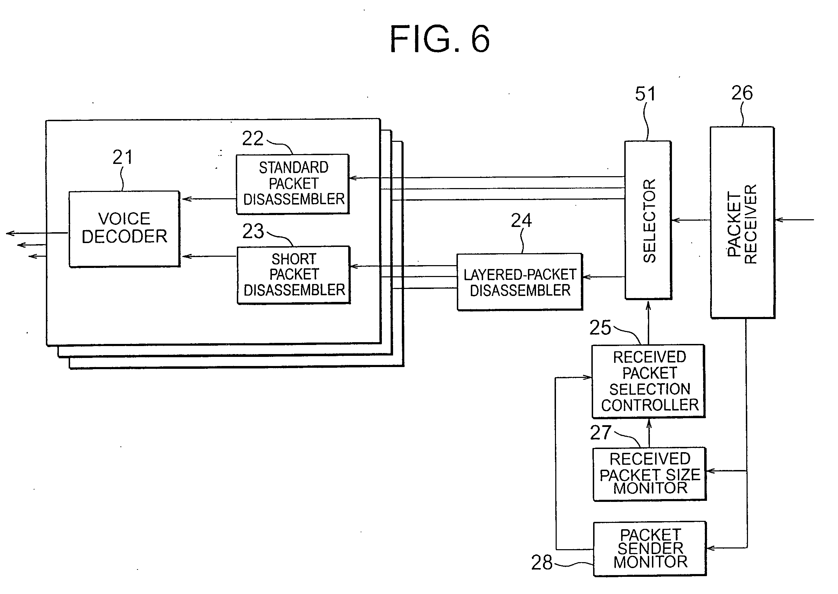

Fig. 6 shows the construction of a receiving-end apparatus in a voice gateway system according to a sixth embodiment of the present invention. In Fig. 6, similar parts to those in the fifth embodiment described above are denoted by similar reference numerals and they are not described in further detail herein. In Fig. 6, reference numeral 28 denotes a packet sender monitor for determining a sender of a received packet on the basis of header information of the received packet.

The operation is described. When a packet is received via the packet receiving unit 26, the packet is supplied to the selector 51. The packet is also supplied to the packet size monitor 27 and the packet sender monitor 28 to monitor the size of the received packet and to determine the sender of the received packet. The packet size monitor 27 supplies information indicating the size (data size) of the input packet to the received packet selection controller 25. The packet sender monitor 28 determines the sender of the received packet on the basis of information described in the header of the received packet and supplies information indicating whether the sender supports the layered packet format to the received packet selection controller 25. In accordance with the information supplied from the packet size monitor 27 and the information supplied from the packet sender monitor 28, the received packet selection controller 25 controls the selector 51 such that if the packet sender supports the layered packet format and if the size of a received packet is greater than a predetermined threshold, the received packet is supplied to the layered-packet disassembler 24, while the received packet is supplied to the standard packet disassembler 22 in the other cases.

The layered-packet disassembler 24 disassembles the inputted packet to short packets and outputs the resultant short packets to the short packet disassemblers 23 of the respective channels. Each short packet disassembler 23 disassembles the received short packet to extract a coded voice signal and outputs the extracted coded signal to the voice decoder 21. The standard packet disassembler 22 disassembles the standard packet to extract a coded voice signal and outputs the extracted coded signal to the voice decoder 21. The standard packet disassembler 22 and the short packet disassembler 23 perform disassembling only when a packet to be disassembled to inputted thereto and output an obtained coded voice signal to the voice decoder 21. However, when no packet is inputted, no signal is outputted. The voice decoder 21 decodes the coded voice signal supplied from the standard packet disassembler 22 or the short packet disassembler 23 and outputs a resultant decoded signal.

However, when no signal is supplied from either the standard packet disassembler 22 or the short packet disassembler 23, a silent voice signal is outputted from the voice decoder 21.

In the voice gateway system according to the present embodiment of the invention, as described above, the sender and the size of a received packet are monitored, and either the standard packet disassembler or the layered-packet disassembler is used in accordance with the monitored information, thereby making it possible to make a connection with not only a voice gateway apparatus that supports the layered packet format but also even a gateway apparatus that supports only the standard packet and thus making it possible to achieve high efficiency in transmission.

### Seventh Embodiment

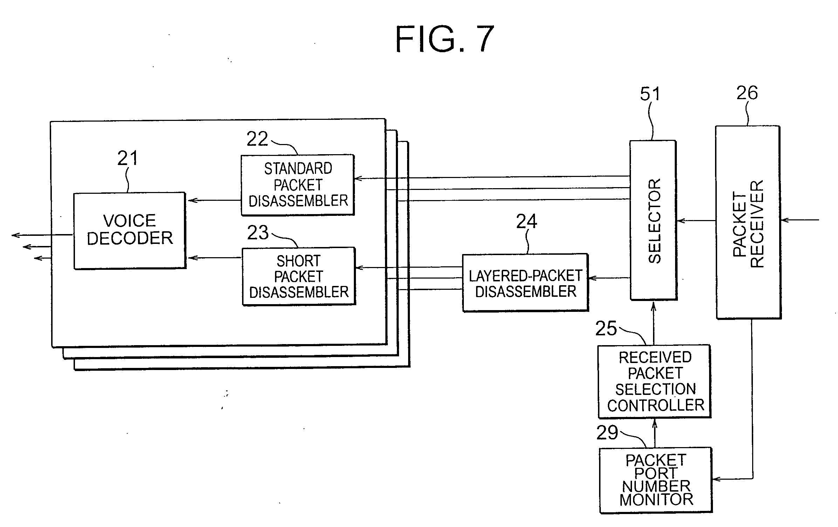

Fig. 7 shows the construction of a receiving-end apparatus in a voice gateway system according to a seventh embodiment of the present invention. In Fig. 7, similar parts to those in the previous embodiments described above are denoted by similar reference numerals and they are not described in further detail herein. In Fig. 7, reference numeral 29 denotes a packet port number monitor for monitoring the port number of a received packet on the basis of header information of the received packet.

The operation is described. When a packet is received via the packet receiving unit 26, the packet is supplied to the selector 51. The packet is also supplied to the packet port number monitor 29 to monitor the port number described in the header of the received packet. The packet port number monitor 29 determines the port number of the received packet on the basis of the header information of the packet and further determines, on the basis of the port number, whether the received packet is a layered packet or a standard packet. The packet port number monitor 29 supplies information indicating the type of the received packet to the received packet selection controller 25. In accordance with the information supplied from the packet port number monitor 29, the received packet selection controller 25 controls the selector 51 such that the received packet is supplied to the standard packet disassembler 22 or the layered-packet disassembler 24.

The layered-packet disassembler 24 disassembles the inputted packet to short packets and outputs the resultant short packets to the short packet disassemblers 23 of the respective channels. Each short packet disassembler 23 disassembles the received short packet to extract a coded voice signal and outputs the extracted coded signal to the voice decoder 21. The standard packet disassembler 22 disassembles the standard packet to extract a coded voice signal and outputs the extracted coded signal to the voice decoder 21. The standard packet disassembler 22 and the short packet disassembler 23 perform disassembling only when a packet to be disassembled to inputted thereto and output an obtained coded voice signal to the voice decoder 21. However, when no packet is inputted, no signal is outputted. The voice decoder 21 decodes the coded voice signal supplied from the standard packet disassembler 22 or the short packet disassembler 23 and outputs a resultant decoded signal. However, when no signal is supplied from either the standard packet disassembler 22 or the short packet disassembler 23, a silent voice signal is outputted from the voice decoder 21.

In the voice gateway system according to the present embodiment of the invention, as described above, the port number a received packet is monitored, and either the standard packet disassembler or the layered-packet disassembler is used in accordance with the monitored information, thereby making it possible to make a connection with not only a voice gateway apparatus that supports the layered packet format but also even a gateway apparatus that supports only the standard packet and thus making it possible to achieve high efficiency in transmission.

### Eighth Embodiment

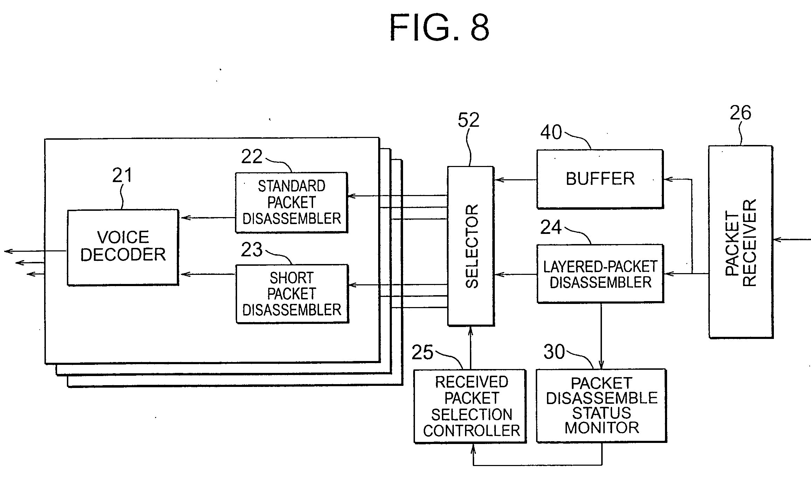

Fig. 8 shows the construction of a receiving-end apparatus in a voice gateway system according to an eighth embodiment of the present invention. In Fig. 8, similar parts to those in the previous embodiments described above are denoted by similar reference numerals and they are not described in further detail herein. The standard packet disassembler 22 disassembles a standard packet received via a selector 52. The short packet disassembler 23 disassembles a short packet supplied via the selector 52 from the layered-packet disassembler 24. The layered-packet disassembler 24 disassembles an input layered packet into short packets, and the packet receiver 26 receives an IP packet from a line. Reference numeral 25 denotes a received packet selection controller for controlling a selector 52 such that either a standard packet or a short packet is disassembled. Reference numeral 30 denotes a packet disassemble status monitor for monitoring the result of disassembling performed by assuming a received packet is a layered packet. Under the control of the received packet selection controller 25, the selector 52 selectively outputs a packet inputted from the buffer 40 to the standard packet disassembler 22 or outputs a short packet inputted from the layered-packet disassembler 24 to the short packet disassembler 23. The buffer 40 serves to temporarily store an input buffer.

The operation is described. When a packet is received via the packet receiver 26, the received packet is supplied to the layered-packet disassembler 24 regardless of whether the received packet is a standard packet or a layered packet. The layered-packet disassembler 24 assumes that the supplied packet is a layered packet and disassembles it into short packets. The packet disassemble status monitor 30 monitors whether the layered-packet disassembler 24 has correctly disassembles the packet, and supplies information indicating the result to the received packet selection controller 25. In the case where the information from the packet disassemble status monitor 30 indicates that the packet has been correctly disassembled, the received packet selection controller 25 determines that the packet is a layered packet and controls the selector 52 such that the short packets outputted from the layered-packet disassembler 24 are supplied to the short packet disassembler 23. However, in the case where the information from the packet disassemble status monitor 30 indicates that the disassembling of the packet has failed, the received packet selection controller 25 determines that the packet is a standard packet and controls the selector 52 such that the output of the buffer 40 is supplied to the standard packet disassembler 22. The buffer 40 serves to temporarily store the packet until the disassembling performed by the layered-packet disassembler 24 has been completed.

Each short packet disassembler 23 disassembles the received short packet to extract a coded voice signal and outputs the extracted coded signal to the voice decoder 21. The standard packet disassembler 22 disassembles the standard packet to extract a coded voice signal and outputs the extracted coded signal to the voice decoder 21. The standard packet disassembler 22 and the short packet disassembler 23 perform disassembling only when a packet to be disassembled to inputted thereto and output an obtained coded voice signal to the voice decoder 21. However, when no packet is inputted, no signal is outputted. The voice decoder 21 decodes the coded voice signal supplied from the standard packet disassembler 22 or the short packet disassembler 23 and outputs a resultant decoded signal. However, when no signal is supplied from either the standard packet disassembler 22 or the short packet disassembler 23, a silent voice signal is outputted from the voice decoder 21.

In the voice gateway system according to the present embodiment of the invention, as described above, a received packet is disassembled into short packets on the assumption that the received packet is a layered packet, and the result is monitored to determine whether the disassembling has been correctly performed. In accordance with the information indicating the result, either the standard packet disassembler or the short packet disassembler is selected, thereby making it possible to make a connection with not only a voice gateway apparatus that supports the layered packet format but also even a gateway apparatus that supports only the standard packet and thus making it possible to achieve high efficiency in transmission.

Although the present invention has been described above with reference to the preferred embodiments, the present invention is not limited to those embodiments. Any possible combination of the embodiments and a possible combination of the transmitting-end apparatus and the receiving-end apparatus are also within the scope of the present invention.

As can be understood from the above description, the present invention has great advantages. That is, the present invention provides a high-efficiency and high-flexibility gateway system capable of making a connection with even a gateway apparatus that supports only the standard IP packet and capable of achieving a high-efficiency transmission even when only one channel is used in a particular direction. More specifically, in an embodiment of the present invention, the number of channels connected in a particular direction is monitored, and when a plurality of channels are connected in a particular direction, a layered packet is constructed, while a standard packet is constructed when a single channel is used in the particular direction, thereby making it possible to achieve a high-efficiency transmission regardless of the situation.

In a voice gateway system according to another embodiment of the present invention, as described above, the number of channels connected to a particular direction is monitored and it is checked whether an apparatus at an opposite end supports the layered packet format, thereby making it possible to make a connection with even a gateway apparatus that supports only the standard packet and also making it possible to achieve a high-efficiency transmission even when only one channel is used in a particular direction. Thus, a high-efficiency and high-flexibility voice gateway system can be realized according to the present embodiment of the invention. The opposite apparatus information managing unit may be realized by using apparatus setting information that is set in an apparatus in advance or by using information obtained via a packet transmission between apparatuses.

In a voice gateway system according to another embodiment of the present invention, as described above, the number of channels connected to a particular direction is monitored, the status of the apparatus in terms of congestion is monitored, and it is checked whether an apparatus at an opposite end supports the layered packet format, thereby making it possible to make a connection with even a gateway apparatus that supports only the standard packet and also making it possible to achieve high efficiency in transmission depending upon the status of the apparatus in terms of congestion. Thus, a high-efficiency and high-flexibility voice gateway system can be realized according to the present embodiment of the invention.

In a voice gateway system according to another embodiment of the present invention, as described above, the number of channels connected to a particular direction is monitored, the network quality is monitored, and it is checked whether an apparatus at an opposite end supports the layered packet format, thereby making it possible to make a connection with even a gateway apparatus that supports only the standard packet and also making it possible to achieve high efficiency in transmission depending upon the network quality. Thus, a high-efficiency and high-flexibility voice gateway system can be realized according to the present embodiment of the invention.

In a voice gateway system according to another embodiment of the present invention, as described above, the size of received packets is monitored, and either the standard packet disassembler or the layered-packet disassembler is used depending upon the detected packet size, thereby making it possible to make a connection with not only a voice gateway apparatus that supports the layered packet format but also even a gateway apparatus that supports only the standard packet and thus making it possible to achieve high efficiency in transmission.

In a voice gateway system according to another embodiment of the present invention, as described above, the sender and the size of a received packet are monitored, and either the standard packet disassembler or the layered-packet disassembler is used in accordance with the monitored information, thereby making it possible to make a connection with not only a voice gateway apparatus that supports the layered packet format but also even a gateway apparatus that supports only the standard packet and thus making it possible to achieve high efficiency in transmission.

In a voice gateway system according to another embodiment of the present invention, as described above, the port number a received packet is monitored, and either the standard packet disassembler or the layered-packet disassembler is used in accordance with the monitored information, thereby making it possible to make a connection with not only a voice gateway apparatus that supports the layered packet format but also even a gateway apparatus that supports only the standard packet and thus making it possible to achieve high efficiency in transmission.

In a voice gateway system according to another embodiment of the present invention, as described above, a received packet is disassembled into short packets on the assumption that the received packet is a layered packet, and the result is monitored to determine whether the disassembling has been correctly performed. In accordance with the information indicating the result, either the standard packet disassembler or the short packet disassembler is selected, thereby making it possible to make a connection with not only a voice gateway apparatus that supports the layered packet format but also even a gateway apparatus that supports only the standard packet and thus making it possible to achieve high efficiency in transmission.

## Claims

1. A gateway system including a transmitting-end apparatus comprising:
a standard packet assembler (12) for assembling an input signal into a standard packet;
a short packet assembler (13) for assembling an input signal into a short packet;
a layered-packet assembler (14) for assembling short packets assembled by the short packet assembler into a standard packet;
a packet selection controller (15) for selecting either the standard packet assembler or the short packet assembler in accordance with a predetermined condition;
a selector (50) for selectively outputting an input signal to either the standard packet assembler or the short packet assembler under the control of the packet selection controller; and
a packet sender (16) for outputting, over a line, packets supplied from the standard packet assembler and the layered-packet assembler.

2. The gateway system according to Claim 1, wherein a transmitted signal is a voice signal.

3. The gateway system according to Claim 2, wherein the transmitting-end apparatus further comprises a voice encoder (11) for performing voice coding on an input voice signal.

4. The gateway system according to one of Claims 1 to 3, wherein the packet selection controller includes a number-of-channels monitor (17) for monitoring the number of channels used in transmission to the same apparatus at an opposite end.

5. The gateway system according to one of Claims 1 to 3, wherein the packet selection controller includes a number-of-channels monitor (17) for monitoring the number of channels used in transmission to the same apparatus at an opposite end; and an opposite apparatus information managing unit (18) for managing information indicating whether the layered packet format is supported by the apparatus at the opposite end.

6. The gateway system according to Claim 5, wherein the opposite apparatus information managing unit (18) is realized by using apparatus setting information that is set in the apparatus in advance.

7. The gateway system according to Claim 5, wherein the opposite apparatus information managing unit (18) is realized by using information described in a packet received from the apparatus at the opposite end.

8. The gateway system according to Claim 4 or 5, wherein the packet selection controller (15) includes a congestion-in-apparatus monitor (19) for monitoring a congestion status in the apparatus.

9. The gateway system according to Claim 4 or 5, wherein the packet selection controller (15) includes a network line quality monitor (20) for monitoring network line quality.
